# EUROPÄISCHE PATENTSCHRIFT

(11) **EP 0 743 578 B1**
(45) Veröffentlichungstag und Bekanntmachung des Hinweises auf die Patenterteilung: **01.08.2001**
(21) Anmeldenummer: 96107831.8
(22) Anmeldetag: 16.05.1996
(51) Int. Cl.: G05B 19/042, F24F 3/16

(54) **Reinraumanlage**
Clean room arrangement
Aménagement de salle blanche

(30) Priorität: 19.05.1995 DE 19518445
(43) Veröffentlichungstag der Anmeldung: 20.11.1996
(73) Patentinhaber: M+W Zander Facility Engineering GmbH, 70499 Stuttgart (DE); ebm Werke GmbH & Co. KG, 74673 Mulfingen (DE)
(72) Erfinder: Reinhardt, Wilhelm, 74575 Schrozberg (DE); Lipp, Helmut, 74673 Hohebach (DE); Schneeweiss, Hartmut, 97980 Bad Mergentheim (DE); Renz, Manfred, Dr., 71254 Ditzingen (DE); Gill, Charan, 70195 Stuttgart (DE)
(74) Vertreter: Jackisch-Kohl, Anna-Katharina

(56) Entgegenhaltungen:
- EP-A- 0 221 618
- EP-A- 0 497 296
- EP-A- 0 585 133
- EP-A- 0 614 047
- WO-A-92/16895
- US-A- 4 918 690
- US-A- 5 058 491
- ELEKTRONIK, Bd. 40, Nr. 22,23, 1991, XP000268228 MUELLER R: "LON - DAS UNIVERSELLE NETZWERK ,TEIL 1 & 2"
- I & CS - INDUSTRIAL AND PROCESS CONTROL MAGAZINE, Bd. 65, Nr. 6, 1.Juni 1992, Seiten 71-74, XP000307176 MINTZ S: "THE LON CHIP: BUILDING BLOCK FOR SMART I/O"
- ADVANCES IN INSTRUMENTATION AND CONTROL, Bd. 48, Nr. PART 02, 1.Januar 1993, Seiten 829-841, XP000435389 PINTO J J: ""CHICKEN-BRAIN" I/O ARCHITECTURE FOR "TRULY" DISTRIBUTED CONTROL"
- QUALITÄT UND ZUVERLÄSSIGKEIT, Bd. 33, Nr. 9, 1988, MÜNCHEN,DE, Seiten 471-475, XP002011080 M. RENZ: "Reinraumtechnik-Voraussetzung für Produktivität und Qualität in der Mikroelektronik"

## Beschreibung

Die Erfindung betrifft eine Reinraumanlage nach dem Oberbegriff des Anspruches 1.

Solche Reinraumanlagen (EP-A-0 497 296) haben Filter-Ventilator-Einheiten, die im Deckenbereich angeordnet sind und jeweils einen Gebläsemotor aufweisen, mit dem der Ventilator angetrieben wird. Er saugt die Reinluft an und fördert sie über einen Filter nach unten in den Reinraum. Als Gebläsemotoren werden Wechselstrommotoren oder Drehstrommotoren mit Phasenanschnittsteuerung zur Regelung bzw. Steuerung der jeweiligen Ventilatoren verwendet. Es ist auch bekannt, einzelne Motoren in Gruppen zusammenzufassen, wobei jede Gruppe gesteuert bzw. geregelt wird. Der Aufbau einer solchen Reinraumanlage mit einzelnen oder gruppenweise angesteuerten Gebläsemotoren ist aufwendig und teuer.

Es ist auch bekannt (EP-A-0 585 133), ein Steuerungssystem zur Steuerung von Ventilatoreinheiten eines industriellen Heizungs- und Ventilationssystems zu verwenden. Das Steuerungssystem hat eine zentrale Steuereinheit, die über einen Datenbus mit Unterstationen verbunden ist, an die der jeweilige Ventilator angeschlossen ist. Die Unterstationen sind in mindestens zwei Gruppen angeordnet und innerhalb jeder Gruppe miteinander verbunden, um den Datentransfer innerhalb der entsprechenden Gruppe zu ermöglichen. Innerhalb jeder Gruppe ist eine Priorität-Unterstation mit der zentralen Steuereinheit verbunden. Von ihr aus werden über die Priotität-Unterstationen die übrigen Unterstationen der Gruppe gesteuert. Dieses Steuerungssystem ist aufwendig ausgebildet.

Es ist auch bekannt (WO-A-92/16895), Netzwerke als LON-Netzwerke auszubilden.

Aus der EP-A-0 614 047 ist schließlich bekannt, in einer elektronischen Steuer- und Regeleinrichtung für Gasbrenner von Heizungsanlagen Luftgebläse zu verwenden, die durch einen Gleichstrommotor gesteuert werden.

Der Erfindung liegt die Aufgabe zugrunde, die gattungsgemäße Reinraumanlage so auszubilden, daß sie einfach im Aufbau ist, kostengünstig gefertigt und montiert werden kann und im Einsatz bei hohem Wirkungsgrad geräuscharm arbeitet.

Diese Aufgabe wird bei der gattungsgemäßen Reinraumanlage erfindungsgemäß mit den kennzeichnenden Merkmalen des Anspruches 1 gelöst.

Bei der erfindungsgemäßen Reinraumanlage sind die Filter-Ventilator-Einheiten über das Bussystem untereinander sowie mit der zentralen Befehlseinheit verbunden. Über das Bussystem kann jede Filter-Ventilator-Einheit von der zentralen Befehlseinheit aus angesteuert bzw. geregelt werden. Jede Filter-Ventilator-Einheit erhält eine Adresse bzw. Identifikationsnummer, über die jede Filter-Ventilator-Einheit direkt von der Befehlseinheit angesprochen werden kann. Dadurch ist es auch sehr einfach möglich, mehrere Filter-Ventilator-Einheiten zu einer beliebigen Gruppe zusammenzufassen und gemeinsam zu betreiben. Von der Befehlseinheit aus werden dann lediglich die entsprechenden Filter-Ventilator-Einheiten einer Gruppe über ihre Adressen bzw. ihre Identifikationsnummern angesprochen. Mit der erfindungsgemäßen Reinraumanlage ist es möglich, nachträglich die einzelnen Einheiten von der Befehlseinheit aus neu einzustellen, d.h. die Vergabe einer speziellen Lüfternummer für die Reinraumanlage. Bei den bekannten Gebläsemotoren mit Phasenanschnittsteuerung müssen zur Neueinstellung Dip-Schalter an den Einheiten eingestellt werden, was umständlich und aufwendig ist.

Die Gebläsemotoren können beispielsweise in mehreren fest vorgegebenen Drehzahlstufen digital geregelt bzw. gesteuert werden. Bei den herkömmlichen Gebläsemotoren wird die Drehzahl indirekt über die Spannungsüberwachung geregelt bzw. gesteuert. Dazu muß für jeden Gebläsemotor eine Spannungs-Drehzahl-Kurve erstellt werden, anhand der die Drehzahl in Abhängigkeit von der Spannung bestimmt werden kann. Bei der erfindungsgemäßen Reinraumanlage hingegen kann die Drehzahl unmittelbar digital geregelt bzw. gesteuert werden. Über das Bussystem können Daten bzw. Informationen von der Bedieneinheit zu den jeweiligen Filter-Ventilator-Einheiten geschickt werden. Es ist aber ebenso möglich, entsprechende Daten von den Filter-Ventilator-Einheiten zur Befehlseinheit zu schicken. So können beispielsweise im Störfall entsprechende Störmeldungen von der jeweiligen Filter-Ventilator-Einheit an die Befehlseinheit übermittelt werden. Da jeder Filter-Ventilator-Einheit eine Adresse bzw. Identifikationsnummer zugeordnet ist, kann die Befehlseinheit einfach die fehlerhafte Filter-Ventilator-Einheit identifizieren.

Von der Befehlseinheit aus können neue Betriebsdaten an alle oder auch nur an ausgewählte Filter-Ventilator-Einheiten übermittelt werden. So kann beispielsweise die Drehzahl der Ventilatoren für eine individuelle Einstellung der Luftgeschwindigkeit einfach eingestellt werden. Dadurch läßt sich auch das Geräuschverhalten einfach beeinflussen. Ferner ist es beispielsweise möglich, über die Befehlseinheit die Ventilatoren sämtlicher oder ausgesuchter Filter-Ventilator-Einheiten zu vorgegebenen Zeitpunkten zu verändern, beispielsweise bei einer Tag/Nachtabsenkung.

Die elektronisch kommutierten Gleichstrommotoren als Gebläsemotoren haben gegenüber den herkömmlichen Wechselstrommotoren, die über eine Phasenanschnittsteuerung betrieben werden, einen deutlich besseren Wirkungsgrad. Außerdem ergibt sich bei Einsatz der elektronisch kommutierten Gleichstrommotoren eine Geräuschverbesserung bei einer pulsweitenmodulierten Frequenz von ca. 20 kHz im Vergleich zur Phasenanschnittsteuerung bei Wechsel- oder Drehstrommotoren. Die bei Phasenanschnittsteuerung entstehenden Brummgeräusche, die das Ventilatorgehäuse zu Schwingungen anregen können, treten bei Einsatz der elektronisch kommutierten Gleichstrommotoren nicht oder allenfalls nur in vernachlässigbarem Maße auf.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine erfindungsgemäße Einrichtung zur Regelung und Überwachung von Filter-Ventilator-Einheiten einer Reinraumanlage,
- Fig. 2 bis Fig. 4: jeweils in Blockdiagrammen verschiedene Elemente der erfindungsgemäßen Einrichtung.

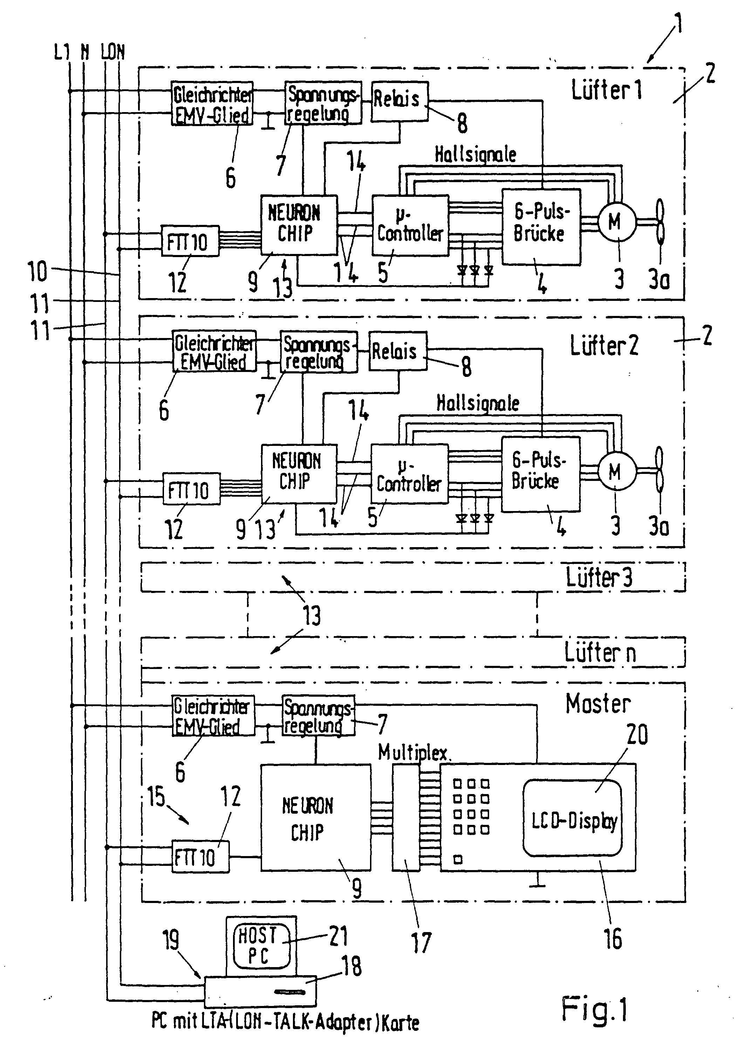

Die im folgenden beschriebene Einrichtung dient zur Steuerung und/oder Regelung einer Lüftungsanlage 1 eines Reinraumes. Die Lüftungsanlage 1 hat in bekannter Weise im Deckenbereich des Reinraumes angeordnete Filter-Ventilator-Einheiten 2, die an der Decke des Reinraumes in einem Rastermaß aufgehängt sind. Es ist aber auch möglich, die Filter-Ventilator-Einheiten 2 auf dem Boden oder an der Seitenwand des Reinraumes abzustützen. Die Filter-Ventilator-Einheiten 2 haben jeweils einen Ventilator 3a, der mittels eines Motors 3 angetrieben wird. Die Reinluft strömt durch einen (nicht dargestellten) Filter nach unten in den Reinraum und durchströmt ihn laminar. Im Boden des Reinraumes sind in bekannter Weise Öffnungen, durch welche die nach unten strömende Reinluft in eine Rückführung strömt, über welche die Reinluft den einzelnen Filter-Ventilator-Einheiten zugeführt wird. In Fig. 1 ist die Filter-Ventilator-Einheit 2 schematisch durch eine strichpunktierte Linie dargestellt.

Der Motor 3 der Filter-Ventilator-Einheit 2 ist ein elektronisch kommutierter Gleichstrommotor. Je nach Baugröße der Filter-Ventilator-Einheit 2 werden ein- oder mehrsträngige Gleichstrommotoren eingesetzt. Im dargestellten Ausführungsbeispiel ist der Motor 3 ein dreisträngiger, elektronisch kommutierter Gleichstrommotor. Die dreisträngigen Motoren 3 sind in Dreieckschaltung verschaltet und werden mit einer sechspulsig betriebenen Brückenschaltung 4 bestromt. Werden als Gleichstrommotoren einsträngige Motoren verwendet, dann erfolgt die Bestromung des Motors über eine H-Vollbrückenschaltung.

Die Brückenschaltung 4 ist einem Mikrocontroller 5 nachgeschaltet. Die Kommutierungszeitpunkte des Motors 3 werden aus den Ausgangssignalen von drei Hall-Sensoren bzw. aus der Gegen-EMK (elektromotorische Kraft) abgeleitet, die dem Mikrocontroller 5 zugeführt werden. Er liefert die Kommutierungsimpulse für den Motor 3. Diese Kommutierungsimpulse werden über die Brückenschaltung 4 dem Motor 3 zugeführt.

Die Versorgungsspannung des Motors 3 wird aus der Netzspannung L1, N abgeleitet. Die Netzspannung wird zunächst an einem Gleichrichter 6 gleichgerichtet, dem eine Spannungsregelung 7 nachgeschaltet ist. Die Spannungsregelung 7 ist vorzugsweise ein Power-Factor-Controller, der die gleichgerichtete Netzspannung konstant hält und die Oberschwingungsanteile des Netzstromes gering hält, wodurch ein Leistungsfaktor ≈ 1 realisiert wird.

Die Spannungsregelung 7 ist über einen Schalter 8, der vorzugsweise ein Relais ist, mit der Brückenschaltung 4 verbunden. Tritt an der Filter-Ventilator-Einheit 2 ein Fehler auf, kann mittels des Schalters 8 die Brückenschaltung 4 der Filter-Ventilator-Einheit 2 vom Netz L1, N getrennt werden.

Das in Fig. 1 dargestellte Blockschaltbild des Gleichrichters 6 enthält auch ein EMV-Glied (elektromagnetische Verträglichkeit) bzw. einen Filter, der eventuell auftretende unzulässig hohe Strom- und Spannungsspitzen abbaut.

Die Spannungsregelung 7 und der Schalter 8 sind an einen Mikrocontroller 9, vorzugsweise einen Neuron-Chip, angeschlossen, der Bestandteil eines LON-Netzwerkes 10 ist. Über dieses Netzwerk 10 sind sämtliche Filter-Ventilator-Einheiten 2 untereinander verbunden. Solche LON-Netzwerke sind bekannt und werden darum nur kurz beschrieben. Diese Netzwerke übertragen Sensor- und Kontrolltelegramme. Typischerweise sind diese Telegramme sehr kurz. Sie enthalten Kommando- und Statusinformationen, die Aktionen auslösen sollen. Ein LON-Netzwerk kann bis zu 32.768 intelligente Knoten aufweisen, die in der Lage sind, jede Steuer- und Überwachungsfunktion durchzuführen. Ein Netzknoten kann dabei Entscheidungen auf der Grundlage von Informationen fällen, die ihm andere Knoten übermitteln. Die Netzknoten des LON-Netzwerkes 10 enthalten die Neuron-Chips 9, in denen das gesamte LON-Protokoll integriert ist. Die Verbindung zwischen der eigentlichen, die Netzknoten untereinander verbindenden Verbindungsleitung 11 und den angeschlossenen Filter-Ventilator-Einheiten bzw. Handterminal und/oder Personalcomputer wird über einen Schnittstellenbaustein 12 hergestellt, der zur galvanischen Trennung dient und außerdem eine hohe Kurzschlußfestigkeit bis beispielsweise 270 V aufweist. Der Schnittstellenbaustein 12 ist ein Transceiver, der die über die Verbindungsleitung 11 des LON-Netzwerkes kommenden Signale umwandelt und dem Mikrocontroller 9 zuführt.

Der Mikrocontroller 9 ist mit der Spannungsregelung 7, dem Schalter 8 sowie dem Motorcontroller 5 verbunden.

Die Bausteine 4, 5, 6, 7, 8, 9, 12 bilden einen Lüfterknoten 13, über den der Motor 3 an das LON-Netzwerk 10 angeschlossen ist. Der Lüfterknoten enthält die Motorsteuerung 4, 5 in Form der Brückenschaltung 4 und dem Mikrocontroller 5 sowie die digitale Regelung im Mikrocontroller 9. Der Mikrocontroller 9 in Form des Neuron-Chips enthält weiterhin ein Kommunikationsprotokoll, über das die Verbindung zwischen dem LON-Netzwerk 10 und der Motorsteuerung 4, 5 hergestellt wird. Der Neuron-Chip 9 ist über eine Schnittstelle 14 mit dem Motorcontroller 5 der Kommutierungselektronik des Motors 3 verbunden. Der Eingang des Motorcontrollers 5 ist so ausgeführt, daß eine Trennung von Motorelektronik und LON-Netzwerk 10 möglich ist. Dadurch ist eine Austauschbarkeit verschiedener Motortypen gewährleistet.

Die beschriebenen Bausteine 3 bis 14 sind in die Filter-Ventilator-Einheit 2 integriert. Jede einzelne Filter-Ventilator-Einheit 2 ist in gleicher Weise mit diesen Bausteinen versehen und an das LON-Netzwerk 10 angeschlossen. Darum kann über den jeweiligen Lüfterknoten 13 jede Filter-Ventilator-Einheit 2 angesprochen werden. Enthält die Lüftungsanlage 1 n Filter-Ventilator-Einheiten 2, sind dementsprechend n Lüfterknoten 13 vorhanden.

An das LON-Netzwerk 10 ist außerdem über einen Terminalknoten 15 ein Handterminal 16 angeschlossen. Es dient dazu, die Anlage zu starten und lüfterspezifische Daten der einzelnen Lüfterknoten 13 einzulesen und zu analysieren.

Der Terminalknoten 15 hat den Schnittstellenbaustein 12, der die Verbindung von der Verbindungsleitung 11 des LON-Netzwerkes 10 zum Neuron-Chip 9 herstellt. Dieser Mikrocontroller 9 ist über einen Multiplexer 17 mit dem Handterminal 16 verbunden. Die Spannungsversorgung des Handterminals 16 sowie des Neuron-Chips 9 erfolgt wiederum über den Gleichrichter 6 und die Spannungsregelung 7. Im Blockschaltbild des Gleichrichters 6 ist vorzugsweise das EMV-Glied enthalten, mit dem eventuell auftretende unzulässige Strom- und Spannungsspitzen abgebaut werden.

Der Terminalknoten 15 weist erweiterte Protokollfunktionen auf. Alternativ hierzu oder zusätzlich zum Handterminal 16 kann auch ein Personalcomputer 18 vorgesehen sein, der ebenfalls an das LON-Netzwerk 10 angeschlossen ist. Die Verbindung zwischen LON-Netzwerk 10 und Personalcomputer 18 erfolgt durch eine LON-Talk-Adapterkarte, die in den Personalcomputer 18 gesteckt ist. Auch der Personalcomputer 18 dient dazu, die Lüftungsanlage 1 zu starten und lüfterspezifische Daten der einzelnen Lüfterknoten 13 einzulesen und zu analysieren. Die Adapterkarte mit der Verbindungsleitung 11 bildet einen PC-Knoten 19 des Netzwerkes.

Damit die einzelnen Filter-Ventilator-Einheiten 2 über das LON-Bussystem angesprochen werden können, hat jeder Netzknoten 13, 15, 19 eine eigene Adresse bzw. Identifikationsnummer zur Zuordnung der Daten. Vorteilhaft ist die Anlage so ausgebildet, daß die Adresse bzw. Identifikationsnummer nachträglich geändert werden kann, beispielsweise wenn die Lüftungsanlage 1 erweitert wird oder einzelne Einheiten gegen andere Einheiten ausgetauscht werden.

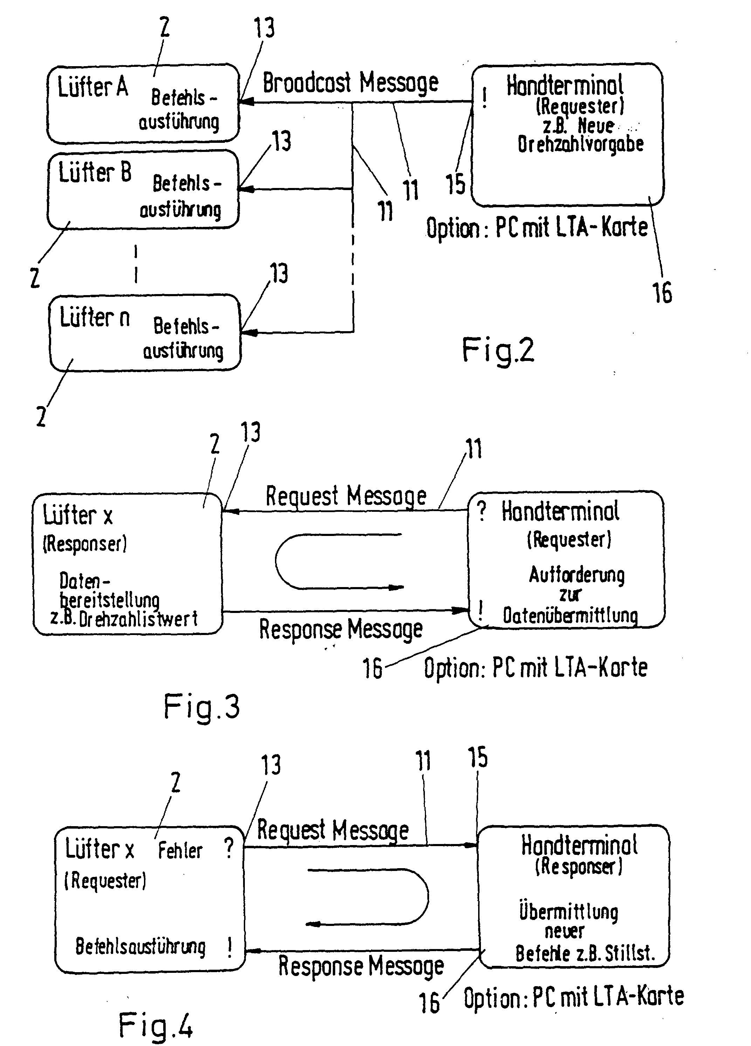

Bei der Zuordnung von Daten von einem Knoten zu einem anderen Knoten werden grundsätzlich zwei Fälle unterschieden. Im ersten Fall wird von einem Quellknoten an alle Zielknoten die gleiche Nachricht übermittelt. Dies wird als Broadcastmessage bezeichnet. Im zweiten Fall werden von einem Quellknoten einem ausgewählten Zielknoten spezielle Daten übermittelt. Dies wird als explizite Message bezeichnet. Dies soll anhand der Fig. 2 bis 4 näher erläutert werden.

Fig. 2 zeigt den Fall, daß von einem Quellknoten aus die gleichen Daten allen übrigen Zielknoten übermittelt werden. Im dargestellten Ausführungsbeispiel werden vom Handterminal 16 aus die gleichen Daten sämtlichen Filter-Ventilator-Einheiten 2 übermittelt. Beispielsweise wird über das Handterminal 16 eine Drehzahl vorgegeben, mit der sämtliche Filter-Ventilator-Einheiten 2 betrieben werden sollen. Über den Terminalknoten 15 und die Verbindungsleitungen 11 werden die entsprechenden Daten über die Lüfterknoten 13 jeder Filter-Ventilator-Einheit 2 übersandt. Auf diese Weise werden sämtliche Filter-Ventilator-Einheiten 2 angesteuert, so daß sie die gleiche Drehzahl haben. Ein weiteres Beispiel für eine Broadcastmessage ist die Tag/Nachtabsenkung im Betrieb der Filter-Ventilator-Einheiten 2. Durch eine im Handterminal 16 eingebaute programmierbare Uhr können die entsprechenden Daten in der beschriebenen Weise zeitgesteuert über das Netzwerk 10 jeder einzelnen Filter-Ventilator-Einheit 2 zugeführt werden.

Anstelle des Handterminals 16 kann selbstverständlich auch der Personalcomputer 18 entsprechende Daten an die verschiedenen Filter-Ventilator-Einheiten 2 senden. In diesem Falle werden die Daten vom Personalcomputer 18 über den PC-Knoten 19 an die einzelnen Lüfterknoten 13 geschickt. Diese Datenübermittlung erfolgt in den Fällen, in denen sämtliche Lüfter-Ventilator-Einheiten 2 mit den gleichen Daten versorgt werden sollen.

Die vom Quellknoten 15, 19 ausgesandten Daten werden über die Schnittstellenbausteine 12, die Neuron-Chips 9 und die Motorsteuerung 4, 5 den Motoren 3 zugeführt, die entsprechend gesteuert werden.

Die Fig. 3 und 4 zeigen zwei Beispiele der expliziten Datenübermittlung. In Fig. 3 ist beispielhaft der Fall dargestellt, daß vom Handterminal 16 - oder auch vom Personalcomputer 18 - Daten an eine spezielle Filter-Ventilator-Einheit 2 geschickt werden. Die entsprechenden Daten werden vom Handterminal 16 aus über den Terminalknoten 15 und die Verbindungsleitungen 11 des Netzwerkes 10 dem ausgewählten Lüfterknoten 13 übermittelt.

Der Lüfterknoten 13 wird über die ihm zugeordnete Adresse bzw. Identifikationsnummer ausgewählt. Beispielsweise soll die Lüfterdrehzahl der ausgewählten Filter-Ventilator-Einheit 2 geändert werden. Die Filter-Ventilator-Einheit 2 ist so ausgebildet, daß nach Einstellung der neuen Drehzahl des Motors 3 eine entsprechende Rückantwort an das Terminal 16 über das Netzwerk 10 erfolgt. Dadurch kann das Terminal 16 bzw. das entsprechende Programm zuverlässig feststellen, ob die ausgewählte Filter-Ventilator-Einheit 2 die vorgesehene Drehzahl für die vorgesehene Luftgeschwindigkeit aufweist. Sollte dies nicht der Fall sein, werden die Daten erneut vom Handterminal 16 zur Filter-Ventilator-Einheit 2 gesandt. Erst wenn die von der Filter-Ventilator-Einheit 2 zurückgeschickten Daten dem Handterminal 16 melden, daß die neuen Daten übernommen worden sind, wird die Datenübertragung vom Handterminal 16 aus beendet. Sollte nach mehrmaligen Datenübertragungen die ausgewählte Filter-Ventilator-Einheit 2 die neuen Daten nicht oder nicht ordnungsgemäß übernehmen, ist das entsprechende, im Handterminal 16 abgelegte Programm so ausgebildet, daß eine Fehlermeldung ausgegeben und die weitere Datenübertragung beendet wird. Das Bedienungspersonal kann dann überprüfen, wo der Fehler liegt.

Auf die beschriebene Weise werden neue Betriebsdaten vom Handterminal 16 bzw. vom Personalcomputer 18 aus an die ausgewählte Filter-Ventilator-Einheit übermittelt.

Fig. 4 zeigt beispielhaft den Fall, daß über den Lüfterknoten 13 aus Daten an das Handterminal 16 bzw. an den Personalcomputer 18 übersandt werden. Dies ist beispielsweise dann der Fall, wenn an der jeweiligen Filter-Ventilator-Einheit 2 ein Fehler auftritt, beispielsweise wenn der Motor 3 blockiert ist, die Solldrehzahl nicht erreicht wird, unzulässig hohe Temperaturen in der Einheit auftreten, der Motor 3 eine falsche Drehrichtung aufweist und dergleichen. In diesem Falle werden über den Lüfterknoten 13 und die Verbindungsleitungen 11 des LON-Netzwerkes 10 entsprechende Daten über den Terminalknoten 15 zum Handterminal 16 bzw. über den PC-Knoten 19 zum Personalcomputer 18 gesandt. Für diesen Fall sind das Handterminal 16 bzw. der Personalcomputer 18 mit einer entsprechenden Anzeige, beispielsweise einer LED, versehen, die auf den entsprechenden Fehlerfall hinweist. Das Handterminal 16 bzw. der Personalcomputer 18 haben jeweils ein Display 20 bzw. 21 (Fig. 1), auf dem die Adresse der den Fehler aufweisenden Filter-Ventilator-Einheit 2 sowie die Ursache des Fehlers angezeigt werden. Das Bedienungspersonal kann auf den Fehler entsprechend reagieren. Nach Fehlerbeseitigung kann die reparierte Einheit vom Handterminal bzw. vom Computer aus auf Funktionstüchtigkeit überprüft werden. Die entsprechende Anzeige wird dann im Display 20 bzw. 21 gelöscht.

Es besteht aber auch die Möglichkeit, beim Auftreten eines Fehlers über das Handterminal 16 bzw. den Personalcomputer 18 das Leistungsteil der entsprechenden Filter-Ventilator-Einheit 2 vom Netz L1, N zu nehmen. In diesem Falle erfolgt die Abschaltung über den Schalter 8 der entsprechenden Einheit 2. Je nach Störungsfall kann auch eine automatische Abschaltung direkt am Lüfterknoten 13 der defekten Filter-Ventilator-Einheit 2 erfolgen. Da jeder Lüfterknoten 13 eine eigene Adresse bzw. Identifikationsnummer hat, kann die defekte Filter-Ventilator-Einheit 2 zuverlässig ausgewählt werden.

Wird zur Kommunikation mit der Lüftungsanlage 1 der Personalcomputer 18 eingesetzt, kann auf dem Bildschirm 21 des Monitors der die Lüftungsanlage 1 enthaltende Raum sowie die Lüftungsanlage graphisch dargestellt werden. Ist eine Filter-Ventilator-Einheit 2 defekt, dann kann in dieser graphischen Darstellung die entsprechende Einheit 2 gekennzeichnet werden. Das Bedienungspersonal weiß dann, in welchem Bereich der Lüftungsanlage 1 die defekte Einheit 2 liegt. Auf diese Weise ist es sehr einfach und damit rasch möglich, örtlich gezielt auf die fehlerhafte Filter-Ventilator-Einheit 2 zuzugreifen.

Infolge des Einsatzes des LON-Bussystems ist es auch möglich, verschiedene beliebig auszuwählende Filter-Ventilator-Einheiten 2 zu einer oder mehreren Gruppen zusammenzufassen, die dann gemeinsam gesteuert oder geregelt werden können. Dadurch ist eine gruppenweise Steuerung bzw. Regelung der Einheiten 2 in der beschriebenen Weise möglich. Diese Zusammenfassung von verschiedenen Filter-Ventilator-Einheiten 2 kann jederzeit nachträglich über das entsprechende Programm des Handterminals 16 bzw. des Personalcomputers 18 erfolgen.

Die einzelnen Knoten 13, 15, 19 des Netzwerkes 10 sind durch die zweidrähtige Verbindungsleitung 11 untereinander verbunden. Anstelle dieser zweidrähtigen Verbindungsleitung 11 ist es auch möglich, die Netzleitung L1, N zur Datenübertragung zu verwenden. In diesem Fall sind andere Transceiver erforderlich, die die Anbindung an die Stromleitungen realisieren.

Als weitere Übertragungsmedien kommen außerdem Hochfrequenz-Übertragungsstrecken, Koaxialkabel, Infrarotleitungen oder Glasfaserkabel in Betracht.

## Patentansprüche

1. Reinraumanlage mit Filter-Ventilator-Einheiten (2), die jeweils mindestens einen Gebläsemotor (3) aufweisen und an ein Stromnetz (L1, N) angeschlossen sind,
dadurch gekennzeichnet, daß die Filter-Ventilator-Einheiten (2) über ein Bussystem (10) untereinander und mit mindestens einer zentralen Befehlseinheit (16, 18) verbunden sind, daß jede Filter-Ventilator-Einheit (2) über eine Adress- bzw. Identifikationsnummer von der Befehlseinheit (16, 18) direkt ansprechbar ist und das Bussystem Teil eines LON-Netzwerkes ist, daß die Filter-Ventilator-Einheiten (2) über jeweils einen Knoten (13) an das Bussystem (10) angeschlossen sind, und daß die Gebläsemotoren (3) elektronisch kommutierte Gleichstrommotoren sind.

2. Anlage nach Anspruch 1,
dadurch gekennzeichnet, daß die Befehlseinheit (16, 18) über einen Knoten (15, 19) an das Bussystem (10) angeschlossen ist.

3. Anlage nach Anspruch 1 oder 2,
dadurch gekennzeichnet, daß jeder Gebläsemotor (3) mit dem zugehörigen Knoten (13) über eine Motorsteuerung (4, 5) verbunden ist, die vorteilhaft eine Brückenschaltung (4) und/oder einen Mikrocontroller (5) aufweist.

4. Anlage nach einem der Ansprüche 1 bis 3,
dadurch gekennzeichnet, daß der Knoten (13) der Filter-Ventilator-Einheit (2) an den Mikrocontroller (5) über eine Schnittstelle (14) angeschlossen ist.

5. Anlage nach einem der Ansprüche 1 bis 4,
dadurch gekennzeichnet, daß der Knoten (13) der Filter-Ventilator-Einheit (2) einen Mikrocontroller (9), vorzugsweise einen Neuron-Chip, aufweist, der vorzugsweise über einen Schnittstellenbaustein (12) mit dem Bussystem (10) und/oder über die Schnittstelle (14) mit dem Mikrocontroller (5) der Motorsteuerung (4, 5) verbunden ist.

6. Anlage nach einem der Ansprüche 1 bis 5,
dadurch gekennzeichnet, daß der Gebläsemotor (3) über einen Spannungsgleichrichter (6) an das Stromnetz (L1, N) angeschlossen ist, dem vorzugsweise ein Spannungsregler (7) nachgeschaltet ist.

7. Anlage nach einem der Ansprüche 1 bis 6,
dadurch gekennzeichnet, daß die Befehlseinheit (16) ein Handterminal ist.

8. Anlage nach einem der Ansprüche 1 bis 7,
dadurch gekennzeichnet, daß die Befehlseinheit über einen Multiplexer (17) an den zugehörigen Knoten (15) angeschlossen ist, der vorteilhaft einen Mikrocontroller (9) aufweist, der über einen Schnittstellenbaustein (12) an das Bussystem (10) angeschlossen ist.

9. Anlage nach einem der Ansprüche 1 bis 8,
dadurch gekennzeichnet, daß die Befehlseinheit (18) ein Personalcomputer ist.

10. Anlage nach einem der Ansprüche 1 bis 9,
dadurch gekennzeichnet, daß das Bussystem (10) eine zweistrangige Verbindungsleitung (11) aufweist.

11. Anlage nach einem der Ansprüche 1 bis 9,
dadurch gekennzeichnet, daß als Übertragungsmedium das Stromnetz (L1, N) dient.

12. Anlage nach einem der Ansprüche 1 bis 9,
dadurch gekennzeichnet, daß als Übertragungsmedium Infrarotkabel, Glasfaserkabel, Koaxialkabel und dergleichen dienen.

## Claims

1. A clean-room installation with filter-ventilator units (2), each of which has at least one fan motor (3) and is connected to a mains supply (L1, N),
characterised in that the filter-ventilator units (2) are connected to one another and to at least one central command unit (16, 18) via a bus system (10), that each filter-ventilator unit (2) is directly addressable by the command unit (16, 18) via an address number or identification number and the bus system is part of an LAN network, that the filter-ventilator units (2) are connected to the bus system (10) in each case via a node (13), and that the fan motors (3) are electronically commutated direct-current motors.

2. An installation according to Claim 1,
characterised in that the command unit (16, 18) is connected to the bus system (10) via a node (15, 19).

3. An installation according to Claim 1 or 2,
characterised in that each fan motor (3) is connected to the associated node (13) via a motor-control system (4, 5), which advantageously has a bridge connection (4) and/or a micro-controller (5).

4. An installation according to one of Claims 1 to 3,
characterised in that the node (13) of the filter-ventilator unit (2) is connected to the micro-controller (5) via an interface (14).

5. An installation according to one of Claims 1 to 4,
characterised in that the node (13) of the filter-ventilator unit (2) has a micro-controller (9), preferably a neuron chip, which is preferably connected to the bus system (10) via an interface component (12) and to the micro-controller (5) of the motor-control system (4, 5) via the interface (14).

6. An installation according to one of Claims 1 to 5,
characterised in that the fan motor (3) is connected to the mains supply (L1, N) via a voltage rectifier (6), downstream of which a voltage regulator (7) is preferably connected.

7. An installation according to one of Claims 1 to 6,
characterised in that the command unit (16) is a manually-operated terminal.

8. An installation according to one of Claims 1 to 7,
characterised in that the command unit is connected to the associated nodes (15) via a multiplexer (17), which preferably has a micro-controller (9) which is connected to the bus system (10) via an interface component (12).

9. An installation according to one of Claims 1 to 8,
characterised in that the command unit (18) is a personal computer.

10. An installation according to one of Claims 1 to 9,
characterised in that the bus system (10) has a double-stranded connection lead (11).

11. An installation according to one of Claims 1 to 9,
characterised in that the mains supply (L1, N) serves as a conduction medium.

12. An installation according to one of Claims 1 to 9,
characterised in that infra-red cables, glass-fibre cables, co-axial cables and similar serve as a conduction medium.

## Revendications

1. Installation de salle blanche comportant des unités à filtre-ventilateur (2), qui possèdent respectivement au moins un moteur de soufflante (3) et sont connectées à un réseau d'alimentation (L1,N),
caractérisée en ce que les unités à filtre-ventilateur (2) sont reliées entre elles par l'intermédiaire d'un système de bus (10) et à l'aide d'au moins une unité centrale de commande (16,18), que chaque unité à filtre-ventilateur (2) peut être appelée directement par l'unité de commande (16,18) par l'intermédiaire d'une adresse ou d'un numéro d'identification et que le système de bus fait partie d'un réseau LON, que les unités à filtre-ventilateur (2) sont connectées au système de bus (10) par l'intermédiaire respectivement d'un noeud (13), que les moteurs de soufflante (3) sont des moteurs commutés à courant continu.

2. Installation selon la revendication 1, caractérisée en ce que les unités de commande (16,18) sont connectées au système de bus (10) par l'intermédiaire d'un noeud (15,19).

3. Installation selon la revendication 1 ou 2, caractérisée en ce que chaque moteur de soufflante (3) est relié au noeud associé (13) par l'intermédiaire d'une unité de commande (4,5) du moteur, qui possède avantageusement un circuit en pont (4) et/ou un microcontrôleur (5).

4. Installation selon l'une des revendications 1 à 3, caractérisée en ce que le noeud (13) de l'unité à filtre-ventilateur (2) est connecté à un microcontrôleur (5) par l'intermédiaire d'une interface (14).

5. Installation selon l'une des revendications 1 à 4, caractérisée en ce que le noeud (13) de l'unité à filtre-ventilateur (2) possède un microcontrôleur (9), de préférence une plaquette neuronale, qui est reliée au système de bus (10) de préférence par l'intermédiaire d'un module d'interface (12) et/ou au microcontrôleur (5) de l'unité de commande (4,5) du moteur par l'intermédiaire d'une interface (14).

6. Installation selon l'une des revendications 1 à 5, caractérisée en ce que le moteur de soufflante (3) est connecté au réseau (L1,N) par l'intermédiaire d'un redresseur de tension (6), en aval duquel est branché de préférence un régulateur de tension (7).

7. Installation selon l'une des revendications 1 à 6, caractérisée en ce que l'unité de commande (16) est un terminal manuel.

8. Installation selon l'une des revendications 1 à 7, caractérisée en ce que l'unité de commande est connectée au noeud associé (15) par l'intermédiaire d'un multiplexeur (17), qui comporte avantageusement un microcontrôleur (9) qui est connecté au système de bus (10) par l'intermédiaire d'un module d'interface (12).

9. Installation selon l'une des revendications 1 à 8, caractérisée en ce que l'unité de commande (18) est un ordinateur personnel.

10. Installation selon l'une des revendications 1 à 9, caractérisée en ce que le système de bus (10) possède une seconde ligne de liaison bifilaire (11).

11. Installation selon l'une des revendications 1 à 9, caractérisée en ce qu'on utilise comme milieu de transmission le réseau d'alimentation (L1,N).

12. Installation selon l'une des revendications 1 à 9, caractérisée en ce que des câbles à infrarouge sont des câbles formés de fibres de verre, des câbles coaxiaux et analogues sont utilisés en tant que milieu de transmission.
